# EUROPÄISCHE PATENTSCHRIFT

(11) **EP 1 327 726 B1**
(45) Veröffentlichungstag und Bekanntmachung des Hinweises auf die Patenterteilung: **11.10.2006**
(21) Anmeldenummer: 02000016.2
(22) Anmeldetag: 03.01.2002
(51) Int. Cl.: E04B 1/98

(54) **Einstellbarer Schwingungstilger**
Adjustable vibration damper
Dispositif amortisseur de vibrations règlable

(43) Veröffentlichungstag der Anmeldung: 16.07.2003
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- EP-A- 0 383 081
- EP-A- 1 046 832
- US-A- 5 072 801
- US-A- 5 347 772

## Beschreibung

Die Erfindung betrifft einen Tilger zum Dämpfen bzw. zur Reduzierung von unerwünschten Schwingungen, welcher in Bezug auf die Schwingungseigenschaften des zu dämpfenden Systems stufenlos einstellbar bzw. anpassbar ist, wobei weder Federsteifigkeit des Tilgers noch die Tilgermasse verändert werden müssen. Der erfindungsgemäße Tilger ist besonders geeignet, in Bauwerken, insbesondere Brücken, Decken, Treppenkonstruktionen sowie Maschinen, eingebaut zu werden, welche zum Teil erhebliche Schwingungen erzeugenden Kräften ausgesetzt sind.

Das System des Schwingungstilgers ist bekannt und in der Literatur hinreichend beschrieben. Schwingungstilger bestehen im Prinzip aus einem Dämpfungselement und einer Tilgermasse. Als Dämpfungselement dienen im einfachsten Fall Federn bzw. Federsysteme, aber auch elastische Systeme oder hydraulische Systeme oder Kombinationen aus diesen werden eingesetzt. Derartige Schwingungsdämpfer sind beispielsweise in DE-PS-3414706, DE-OS-4215402, DE-PS-4313835 oder auch in DE-OS-3929984 beschrieben.

Schwingungstilger müssen auf die Frequenz des zu dämpfenden Bauteiles abgestimmt werden. Die Abstimmung der Tilgerfrequenz erfolgt üblicherweise durch Änderung der Steifigkeit der eingesetzten Feder- bzw. Elastomerelemente sowie durch Änderung der Tilgermasse. Da die Tilgermasse eine für die Tilgung des Systems festgelegte Mindestgröße nicht unterschreiten darf, um eine optimale Schwingungstilgung zu erzielen, größere Massen jedoch oft nicht vorhandenen oder unerwünschten Platz einnehmen und Kosten erfordern, kann nur durch Anpassung bzw. Einstellung der Tilgerfrequenz Einfluß auf das Schwingungssystem genommen werden. Dies wiederum erreicht man durch Auswahl, Variation und/oder Kombination der Steifigkeit der eingesetzten Feder-, Elstomer- oder Hydraulikelemente.

Aus der US Patentschrift 5,072,801 ist ein einstellbarer Schwingungstilger bekannt, welcher zur Dämpfung von Schwingungen vorzugsweise in Fahrzeugen verwendet werden kann, und der eine Dämpfungskonstruktion aufweist, bestehend im wesentlichen aus einer als Hebel fungierenden Auslegerplatte, die an ihrem fixierten Ende an einem starren nicht-elastischen Gelenklager befestigt und um dieses schwenkbar ist und an ihrem freien Ende auf einem Dämpfungselement, das entlang des Auslegers verschiebbar ist, lose ruht, so dass durch Verschieben der beweglichen Tilgermasse auf dem Ausleger unterschiedliche aber für ein bestimmtes System definierte Schwingungseigenschaften eingestellt werden können. Eine solche Anordnung ist nur in der Lage einseitige Schwingungen durchzuführen bzw. zu dämpfen, wobei zur Einstellung für ein bestimmtes System (Fahrzeug) praktischer Weise die Tilgermasse verschoben wird. Eine automatische Einstellung auf die jeweilige Eigenfrequenz des Fahrzeuges kann, wie in der US 5,072,801 vorgeschlagen, nur durch zusätzlichen Einbau eines elektronischen Regelkreises erfolgen.

Aufgabe der vorliegenden Erfindung ist es somit einen Schwingungstilger, insbesondere für Bauwerke und Treppen zur Verfügung zu stellen, der die oben genannten Nachteile der bekannten Systeme nicht aufweist, insbesondere aber im Gegensatz zur vorgeschlagenen Lösung aus der US 5,072,801 in der Lage ist, automatisch den Erzeugerschwingungen des zu dämpfenden Systems ohne Änderung der Tilgermasse und der Federsteifigkeit und mittels rein auf mechanischen Prinzipien beruhenden Maßnahmen entgegen zu wirken.

Die Aufgabe wird durch den einstellbaren Gelenktilger, wie er in den Ansprüchen und folgend beschrieben wird, gelöst.

Im folgenden und in den Ansprüchen haben die genannten Bezugsgrößen die folgenden Bedeutungen:

| Position | Bedeutung |
|---|---|
| (1) | Tilgermasse |
| (2) | Dämpfungselement |
| (3) | Dämpfungselement für Ausgleichsbewegung |
| (4) | Hebelbauteil |
| (5) | Verstellbares Befestigungslager am Hebelbauteil |
| (6) | Tragekonsole für Tilgermasse |
| (7) | Befestigungsmittel für Tilgermasse |
| (8) | Tragekonstruktion für gesamten Tilger |
| (9) | Schwingungsweg der Tilgermasse |
| (10) | Schwingungswinkel der Tilgermasse |
| (11) | Dämpfungskonstruktion bestehen aus Dämpfungselement (2) und |
| | Hebelbauteil (4) |

Gegenstand der Erfindung ist somit ein einstellbarer Schwingungstilger, der zur Dämpfung von Schwingungen Bauwerken und Treppenkonstruktionen geeignet ist und im wesentlichen aus einer Iragekonstruktion (8), einer Tilgermasse (1) und einer Dämpfungskonstruktion (11) besteht, wobei die Dämpfungskonstruktion ein Dämpfungsselement (2) und ein als Hebelarm wirkendes mit dem Dämpfungselement verbundenes Bauteil (4) aufweist, entlang welchem mindestens ein verstellbares Befestigungslager (5) angebracht ist, an dem die Tilgermasse (1) oder eine diese aufnehmende Konsole (6) befestigt ist, und gegenüber dem Stand der Technik dadurch gekennzeichnet ist, dass er mindestens zwei der besagten Dämpfungskonstruktionen (11) aufweist, wobei jede Dämpfungskonstruktion (11) aus dem Dämpfungselement (2) und aus dem as Hebelarm wirkenden Bauteil (4) besteht, und wobei die Dämpfungselemente (2) auch gleichzeitig als elastomere Lager für die Tragekonstruktion bzw. die Tilgermasse fungieren, und die Hebelarme (4) in entgegen gesetzte Richtung weisen und dabei Drehbewegungen mit dem Schwingungswinkel (10) um die Drehpunkte der Dämpfungselemente ausführen können, um entsprechende Wippbewegungen der Tilgermasse (1) zuzulassen.

Der erfindungsgemäße Tilger hat den Vorteil, dass er ohne Änderung der Tilgermasse und der Federsteifigkeit auf das spezielle zu dämpfende Schwingungssystem eingestellt werden kann. Tilgermasse, Federsteifigkeit sowie Ausmaße und Beschaffenheit der Trage- und Dämpfungskonstruktion werden dabei entsprechend der physikalischen Parameter des Schwingungssystems nach Größen und Gesetzen ausgewählt, die dem Fachmann bekannt sind. Die Tragekonstruktion (8) ist auf einer Seite unmittelbar mit dem Schwingungssystem verbunden, beispielsweise durch Verschrauben, Vernieten oder Verschweißen. Die Tragekonstruktion ist auf der anderen Seite wiederum mit den Dämpfungskonstruktionen (11) verbunden, welche beispielsweise angeschweißt oder mit üblichen Befestigungsmitteln befestigt sind.

An oder auf den Dämpfungskonstruktionen (11) ist die Tilgermasse (1) angebracht. Diese kann entweder direkt mit den Dämpfungskonstruktionen verbunden sein oder aber über eine Tragekonsole (6), welche Befestigungsmittel (7) aufweist, um die Tilgermasse zu fixieren. Die Tragekonsole selbst ist direkt mit den verschiebbaren Befestigungslagern (5) verbunden. Vorzugsweise wird eine Tragekonsole, welche die Tilgermasse aufnimmt, eingesetzt.

Der gesamte Tilger ist so konzipiert, dass die Tilgermasse ausschließlich in z-Richtung, also senkrecht zur Ebene der Tragekonstruktion, schwingt und der Erregerschwingung entgegenwirkt. Die Anbringung des Tilgers ist demgemäß vorgegeben. Bei der Schwingungsdämpfung einer Brücke, einer Bodendecke oder einer Treppe ist eine unterhalb der jeweiligen Bodenfläche hängende Anordnung bevorzugt, während bei einer Decke eine oberhalb dieser angebrachte Konstruktion sich anbietet. Prinzipiell kann aber, je nach baulicher Konstruktion der zu dämpfenden Anlage, jede beliebige Richtung im Raum als z-Richtung ausgewählt werden.

Eine erfindungsgemäße Dämpfungskonstruktion (11) besteht aus einem Dämpfungselement (2) und einem Bauteil (4), welches mindestens ein auf oder an dem Bauteil verschiebbares Befestigungslager (5) aufweist und unmittelbar mit dem Dämpfungselement verbunden ist. Das Dämpfungselement (2) selbst besteht erfindungsgemäß aus einem elastischen oder viskoelastischen Drehfederelement (mit oder ohne zusätzlichem Dämpfungsglied) in Form von Elastomerrundlagern oder Gummibuchsen. Entsprechende Elastomerlager und Gummibuchsen und ihr Aufbau sind hinlänglich bekannt und beispielsweise in der EP 1 046 832 beschrieben. Abb. 1 und 2 zeigen Ausführungsformen solcher Lager.

Die Federsteifigkeit der Dämpfungselemente richtet sich nach der Art des Schwingungssystems und der gewünschten zu unterdrückenden Frequenz. Durch Wahl von unterschiedlichen Materialien mit unterschiedlicher Härte können unterschiedliche Federsteifigkeiten erreicht werden. Üblicherweise besitzen die Dämpfungselemente (2) eines erfindungsgemäßen Schwingungstilgers die gleiche Federsteifigkeit. Es können jedoch Federlemente unterschiedlichen Materials und Aufbau und damit mit unterschiedlichen Dämpfungseigenschaften verwendet werden. Dies hat den Vorteil, dass gegebenenfalls ganz besonderen Resonanzproblemen Rechnung getragen werden kann.

Gegenstand der Erfindung ist somit auch ein entsprechender Schwingungstilger, welcher Dämpfungselemente (2) mit unterschiedlicher Federsteifigkeit aufweist.

Während eine Seite des elastischen Dämpfungselementes (2) mit der Tragekonstruktion (8) verbunden ist, ist an der gegenüberliegenden Seite das besagte Bauteil (4), welches im weitesten Sinn als Hebelarm ausgebildet ist, angebracht, wobei die Verbindung vorzugsweise durch Verschraubung oder Verschweißung hergestellt wird. Erfindungswesentlich ist, dass dieser Hebelarm läßt. Dies kann beispielsweise so erreicht werden, dass der Hebel (4) als T- oder Doppel-T -Träger ausgebildet ist, auf dessen einem T-Teil das Befestigungsteil (5) mittels eines an jeder Stelle fixierbaren Schuhs bewegt werden kann, was zu einer Verkürzung oder Verlängerung des Hebelarms in Bezug auf die Tilgermasse führt. Das Arretieren des Schuhs am T-Träger kann z. B. über Verschraubung oder Verklemmung erfolgen. Eine weiter Möglichkeit ist, das Hebelbauteil (4) als U-Schiene auszubilden, in welcher das Befestigungsteil verschoben und in beliebiger Position durch gängige technische Mittel fixiert werden kann. In einer weiteren Ausführungsform besteht der Hebelarm aus zwei, ggf. an den Enden miteinander verbundenen, in einem gleichen Abstand voneinander parallel verlaufenden Blechen, auf deren Kanten das Befestigungsteil (5) auf der oberen Seite der Konstruktion mittels eines beweglichen Schuhs oder Schlittens oder einer beweglichen Klammer geführt und an der geeigneten Position am Bauteil (4) fixiert werden kann. Im einfachsten Fall besteht der Hebelarm aus einem gelochten Blech, durch dessen Bohrungen das Befestigungsteil (5) mittels eines Bolzens oder einer Schraube an verschieden Positionen aufgesetzt und befestigt werden kann. Die Länge des Hebelbauteils (4) bzw. der Dämpfungskonstruktion (11) richtet sich nach der Tilgermasse, die wiederum durch die Größe des zu beruhigenden Bauwerks bestimmt wird. Längen zwischen 0,3 und 3 m sind geeignet.

Vorzugsweise befindet sich auf einem Hebelbauteil (4) ein entsprechendes Befestigungsteil (5) zur Befestigung der Tilgermasse bzw. der Tragekonsole. In einem solchen Fall besteht der gesamte einstellbare Schwingungstilger aus vorzugsweise vier entsprechenden Dämpfungskonstruktionen (11), wobei jeweils zwei solcher Bauteile ein Paar bilden und in einer Linie mit nach außen weisenden Hebelarmen und nach innen angeordneten Dämpfungs-Drehelementen (2) liegen, und zwei solche Paare parallel gegenüber auf der Tragekonstruktion (8) angebracht sind, so dass die vier Befestigungsteile (5) die vier Eckpunkte eines Rechteckes darstellen, welches die Ebene bildet, die durch die angebrachte Konsole (8) bzw. die Grundfläche der Tilgermasse (1) selbst, eingenommen wird.

Der Schwingungstilger kann insgesamt vier Dämpfungskonstruktionen (11) aufweisen, wobei jeweils zwei Dämpfungskonstruktionen ein Paar bilden und hintereinander so angeordnet sind, dass die beiden Dämpfungselemente (2) sich nebeneinander in einer Linie befinden und die an ihnen angebrachten Hebelarme (4) mit dem jeweiligen verstellbaren Befestigungslager (5) nach außen weisen, und die beiden Paare gegenüberliegend so angeordnet sind, dass die insgesamt vier Hebelarme mit den vier verstellbaren Befestigungslagern eine Ebene bilden und an diesen Befestigungslagern die Konsole (6) mit der Tilgermasse (1) oder diese selbst angebracht ist.

Die Konsole kann dabei erfindungsgemäß auch einfach aus zwei Holmen bestehen, die mit ihren Enden mit den jeweiligen Befestigungslagern (5) verbunden sind und sich mit diesen auf den Hebelarmen (4) verschieben lassen. Die besagten Holme weisen Befestigungsmittel (7) oder Bohrungen zur ihrer Aufnahme auf, um mit der Tilgemasse verbunden werden zu können.

Es ist aber auch erfindungsgemäß möglich, dass die gesamte Anordnung nur aus zwei Dämpfungskonstruktionen (11) besteht, welche gegenüber in der Weise angeordnet sind, dass die beiden Hebelarme (4) in entgegengesetzte Richtungen weisen. In diesem Fall ist jeder Hebelarm (4) vorzugsweise mit zwei der besagten Befestigungslagern (5) ausgestattet.

Erfindungsgemäß kann sich zwischen Befestigungsteil (5) und der Tilgermasse (1) bzw. deren Tragekonsole (6) ein weiteres Dämpfungselement (3) befinden. Ein solches zusätzliches Dämpfungselement wirkt der Drehbewegung des Hebelarms um den Drehpunkt entgegen. Das Dämpfungselement kann beispielsweise eine im weitesten Sinn verstandene elastische Feder, wie z. B. eine Stahl- oder Gummifeder, eine Elastomerlager oder ein anderes gleichwirkendes Bauteil, wie beispielsweise ein hydraulischer Dämpfer, sein.

Auch eine Ausführung als Pendelseil ist denkbar. Die Dämpfungselemente (3) können ebenfalls, wie oben ausgeführt, unterschiedliche Steifigkeit aufweisen.

Somit ist Gegenstand der Erfindung auch ein entsprechender Schwingungstilger, der dadurch gekennzeichnet ist, dass die Befestigungslager (5) weitere Dämpfungselemente (3) für Ausgleichsbewegungen aufweisen.

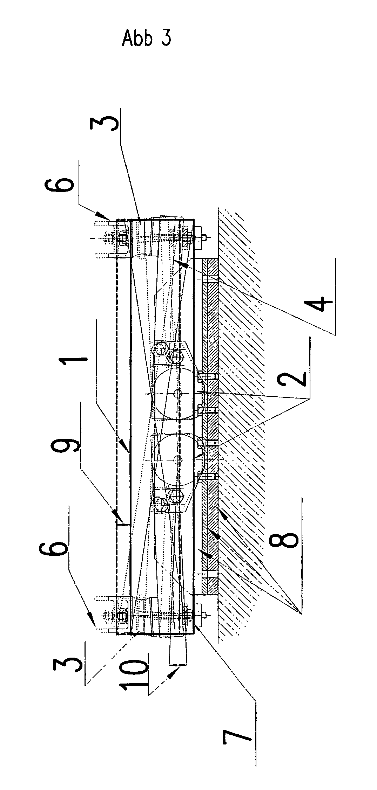

Die Dämpfung von unerwünschten Schwingungen in Bauwerken, insbesondere von Brücken und Treppen aber auch großflächigen Decken und Böden, mittels des erfindungsgemäßen Tilgers erfolgt dadurch, dass die Tilgermasse durch die Feder- bzw. Elastomerelemente in die Lage versetzt wird, mit annähernd der gleichen Frequenz wie die unerwünschte Erzeugerfrequenz zu schwingen und somit der Quellschwingung entgegenwirkt. Durch die erfindungsgemäße Konstruktion werden durch die Dämpfungselemente (2) zugelassene Wippbewegungen der Tilgermasse um die Drehpunkte mit je nach Einstellung und Erregerschwingung unterschiedlichen Schwingungswinkeln (10) und Schwingungswegen (9) erzeugt (Abb. 3).

Die Erzeugerfrequenz dieser Wippbewegung ist jedoch von vielen nicht immer voraus zu berechnenden Faktoren abhängig. Der Schwingungstilger kann somit auf ein bestimmtes Schwingungssystem nur grob und ungenau durch Auswahl einer bestimmten Tilgermasse, Federsteifigkeit und baulichen Konstruktion vorgefertigt werden. Nach Anbringen des Tilgers an dem zu dämpfenden System kann in der Regel nur noch durch Veränderung der Tilgermasse Einfluß auf die Resonanzeigenschaften des Tilgers genommen werden. Dies ist oft aufwendig und insbesondere bei Notwendigkeit der Massenerhöhung des Tilgers aus ästhetischen, statischen oder Platzgründen auch nicht immer möglich.

Das Feinabstimmen der Tilgerfrequenz geschieht erfindungsgemäß nun dadurch, dass durch gleichartiges Verschieben der Befestigungslager (5) und ggf. der Konsolenholme bzw. der Konsole (6), welche mit der Tilgermasse (1) in Verbindung stehen, der entsprechend wirksame Hebelarm verkürzt oder verlängert werden kann, was zu einer Erhöhung oder einer Herabsetzung der Tilgerfrequenz führt. Somit kann mit einer solchen Maßnahme das Schwingungssystem optimal abgestimmt werden.

Die Änderung des Hebelarms kann leicht bei bereits montiertem Tilger von Hand vorgenommen werden. Die Änderung ist jedoch auch maschinell und per Fernbedienung denkbar. Dies hat den Vorteil dass das System kurzfristig auf sich ändernde Bedingungen, welche das Schwingungsverhalten beeinflussen, angepaßt werden kann, so beispielsweise bei temporären starken Windeinflüssen oder raschen tektonischen Bewegungen (Erdbeben) bei Bauwerken, insbesondere Brücken. Tilger für diesen Zweck weisen zusätzliche Vorrichtungen, wie beispielsweise Antriebssysteme, hydraulische Vorrichtungen, zusätzliche mechanische und elektrische Vorrichtungen, Fernbedienungs-, und Meß- und Steuereinrichtungen usw., auf.

Gegenstand der Erfindung ist somit auch die Verwendung des oben und in den Ansprüchen definierten Schwingungstilgers zur Dämpfung von Schwingungen von Bauwerken und Treppenkonstruktionen und Maschinen durch Anpassung der Frequenz der Tilgermasse an das jeweilige Schwingungssystem. Dies wird insbesondere durch Positionsänderung der verstellbaren Befestigungslager (5) bewerkstelligt, so dass bei Krafteinwirkung auf die Hebelarme einer bestimmten Länge der Dämpfungskonstruktionen (11) das Dämpfungselement (2) durch eine Ausgleichsbewegung der Tilgermasse dieser Kraft entgegenwirkt. Gegenstand ist insbesondere eine entsprechende Verwendung, bei der zur Feineinstellung des Schwingungstilgers an das jeweilige Schwingungssystem sowohl Masse als auch Lage des Tilgers nicht geändert werden.

Die erfindungsgemäßen Tilger vermögen je nach gewählter Tilgermasse und Federsteifigkeit Schwingungen insbesondere im Frequenzbereich zwischen 0.5 und 1000 Hz, vorzugsweise zwischen 5 und 300 Hz, zu dämpfen.

Zur Beruhigung von Bauwerken mittlerer Größe, wie Treppen, kleinere Brücken mit einer Eigenmasse von etwa 2,5 t bis 20 t ist eine Tilgemasse des erfindungsgemäßen Tilgers von etwa 200 - 300 kg erforderlich. Ein derartiger Tilger aus Stahl benötigt einen Platz von etwa 0,8 m x 0,35 m x 0,2 m.

Zur Beruhigung von Bauwerken kleiner Größe mit einer Eigenmasse von ca. 0,5 - 4 t werden Tilgermassen von ca. 50 kg benötigt.

Zur Beruhigung von großen Bauwerken wie größere Brücken werden erfindungsgemäß Tilgermassen von 50 - 80 t benötigt, Derartige Tilger aus Stahl haben einen Platzbedarf von etwa 2 m x 1,5 m x 0,4 m.

Selbstverständlich können entsprechend größere oder auch kleinere Tilger erfindungsgemäß eingesetzt werden. Es ist durchaus auch möglich mehrere erfindungsgemäße Tilger mit gleichen und / oder unterschiedlichen Maßen und / oder Frequenz - Einstellungen in einem Bauwerk unterzubringen, da es nicht selten vorkommt, dass unterschiedliche Teile des Bauwerks unterschiedlichen Schwingungen ausgesetzt sind. Ein Bauwerk kann so schwingungsgemäß optimal beruhigt werden.

Als Tilgermasse werden vorzugsweise Materialien, die aus vielen Einzelelementen bestehen, verwendet, so z. B. Eisenteile, Beton, Sand, Kies, Steine, Schrott oder ggf. auch Flüssigkeiten wie Wasser sowie Gemische aus unterschiedlichen Materialien.

### Kurze Beschreibung der Abbildungen:

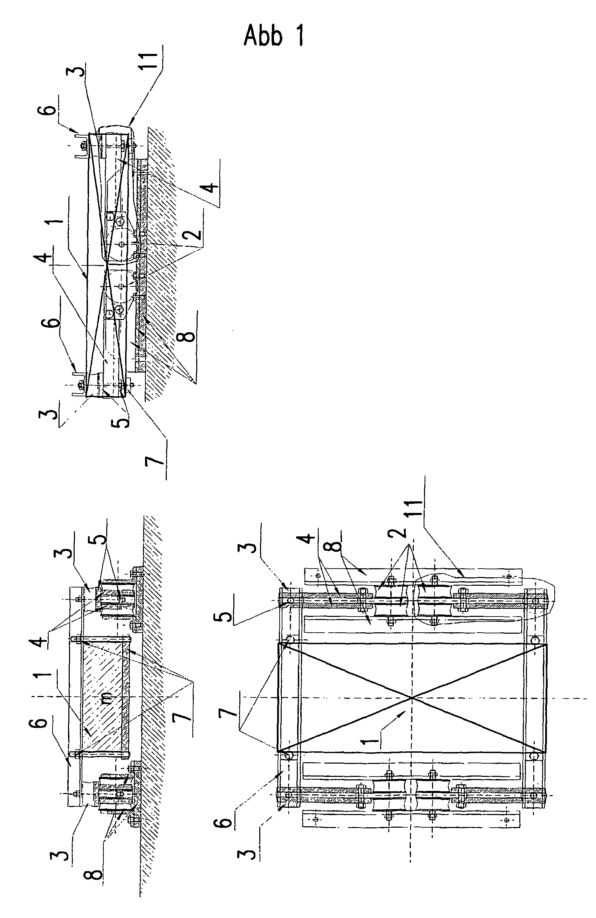

Abb. 1 stellt den erfindungsgemäßen Tilger mit Rund-Drehfedern als Dämpfungselemente (2) in drei verschiedenen Ansichten dar.

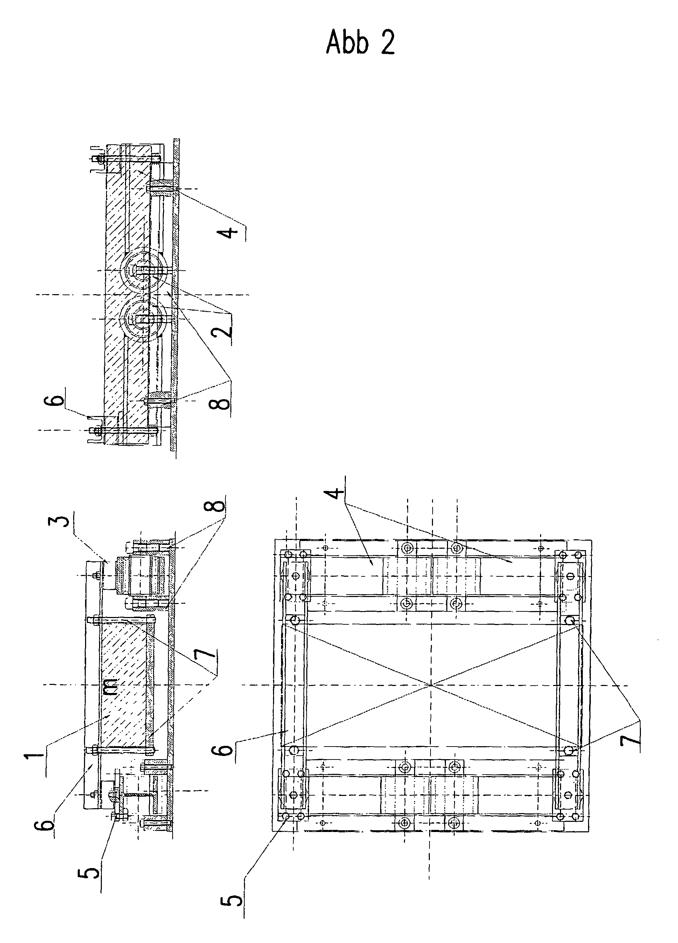

Abb. 2 stellt den erfindungsgemäßen Tilger mit Elastomerbuchsen als Dämpfungselemente (2) in drei verschiedenen Ansichten dar.
Abb. 3 stellt den erfindungsgemäßen Tilger mit Rund-Drehfedern als Dämpfungselemente (2) in Seitenansicht und die möglichen Bewegungen des Tilgers dar.

## Patentansprüche

1. Einstellbarer Schwingungstilger, geeignet zur Dämpfung von Schwingungen in Bauwerken und Treppenkonstruktionen, bestehend im wesentlichen aus einer Tragekonstruktion (8), einer Tilgermasse (1) und einer Dämpfungskonstruktion (11), wobei die Dämpfungskonstruktion ein Dämpfungsselement (2) und ein als Hebelarm wirkendes mit dem Dämpfungselement verbundenes Bauteil (4) aufweist, entlang welchem mindestens ein verstellbares Befestigungslager (5) angebracht ist, an dem die Tilgermasse (1) oder eine diese aufnehmende Konsole (6) befestigt ist,
**dadurch gekennzeichnet dass** er mindestens zwei der besagten Dämpfungskonstruktionen (11) aufweist, wobei jede Dämpfungskonstruktion (11) aus dem Dämpfungselement (2) und aus dem als Hebelarm wirkenden Bauteil (4) besteht, und wobei die Dämpfungselemente (2) Elastomerlager sind, und die Hebelarme (4) in entgegen gesetzte Richtung weisen und Drehbewegungen mit dem Schwingungswinkel (10) um die Drehpunkte der Dämpfungselemente ausführen können, um entsprechende Wippbewegungen der Tilgermasse (1) zuzulassen.

2. Schwingungstilger nach Anspruch 1, **dadurch gekennzeichnet, dass** das die Dämpfungselemente (2) unterschiedliche Federsteifigkeit besitzen.

3. Schwingungstilger nach Anspruch 1 oder 2, **dadurch gekennzeichnet, dass** die Befestigungslager (5) ein weiteres Dämpfungselement (3) für Ausgleichsbewegungen aufweisen.

4. Schwingungstilger nach einem der Ansprüche 1 - 3, **dadurch gekennzeichnet, dass** er vier der besagten Dämpfungskonstruktionen (11) aufweist, wobei jeweils zwei Dämpfungskonstruktionen ein Paar bilden und hintereinander so angeordnet sind, dass die beiden Dämpfungselemente (2) sich nebeneinander in einer Linie befinden und die an ihnen angebrachten Hebelarme (4) mit dem jeweiligen verstellbaren Befestigungslager (5) nach außen weisen, und die beiden Paare gegenüberliegend so angeordnet sind, dass die insgesamt vier Hebelarme mit den vier Befestigungslagern (5) eine Ebene bilden, und an den Befestigungslagern besagte Tilgermasse oder Konsole mit Befestigungsmitteln (7) fixiert ist.

5. Verwendung eines Schwingungstilgers nach einem der Ansprüche 1 - 4 zur Dämpfung von Schwingungen von Bauwerken, Treppenkonstruktionen und Maschinen durch Anpassen der Frequenz der Tilgermasse an das jeweilige Schwingungssystem.

6. Verwendung nach Anspruch 5, **dadurch gekennzeichnet, dass** besagte Frequenzanpassung durch Positionsänderung der verstellbaren Befestigungslager (5) bewerkstelligt wird, so dass bei Krafteinwirkung auf die Hebelarme einer bestimmten Länge der Dämpfungskonstruktionen (11) das Dämpfungselement (2) durch eine Ausgleichsbewegung der Tilgermasse dieser Kraft entgegenwirkt.

7. Verwendung nach Anspruch 6, **dadurch gekennzeichnet, dass** zur Feineinstellung des Schwingungstilgers an das jeweilige Schwingungssystem sowohl Masse als auch Lage des Tilgers nicht geändert werden.

## Claims

1. Adjustable vibration absorber, suitable for damping vibrations in structures and stair constructions, essentially consisting of a supporting construction (8), an absorber material (1) and a damping construction (11), where the damping construction has a damping element (2) and a component (4) acting as lever arm and connected to the damping element and along which is mounted at least one adjustable attachment bearing (5), to which the absorber material (1) or a console (6) accommodating the latter is attached,
**characterized in that** it has at least two of the said damping constructions (11), where each damping construction (11) consists of the damping element (2) and the component (4) acting as lever arm, and where the damping elements (2) are elastomer bearings, and the lever arms (4) point in the opposite direction and are able to execute rotational movements with the vibration angle (10) about the points of rotation of the damping elements in order to allow corresponding rocking movements of the absorber material (1).

2. Vibration absorber according to Claim 1, **characterized in that** the damping elements (2) have different spring stiffness.

3. Vibration absorber according to Claim 1 or 2, **characterized in that** the attachment bearings (5) have a further damping element (3) for compensatory movements.

4. Vibration absorber according to one of Claims 1 - 3, **characterized in that** it has four of the said damping constructions (11), where in each case two damping constructions form a pair and are arranged one after the other in such a way that the two damping elements (2) are located alongside one another in a line and the lever arms (4) mounted on them, with the respective adjustable attachment bearing (5), point outwards, and the two pairs are arranged opposite one another in such a way that the total of four lever arms form a plane with the four attachment bearings (5), and the said absorber material or console is fixed to the attachment bearings by means of attachment means (7).

5. Use of a vibration absorber according to one of Claims 1 - 4 for damping vibrations of structures, stair constructions and machines by matching the frequency of the absorber material to the respective vibration system.

6. Use according to Claim 5, **characterized in that** the said frequency matching is accomplished by changing the position of the adjustable attachment bearings (5) so that, when a force acts on the lever arms of a certain length of the damping constructions (11), the damping element (2) counters this force by a compensatory movement of the absorber material.

7. Use according to Claim 6, **characterized in that**, for fine adjustment of the vibration absorber to the respective vibration system, both the material and also the position of the absorber are not changed.

## Revendications

1. Absorbeur de vibrations réglable, convenant pour amortir des vibrations dans des structures et des constructions d'escalier, constitué essentiellement par une construction de support (8), par un matériau absorbeur (11) et par une construction d'amortissement (11), où la construction d'amortissement comporte un élément d'amortissement (2) et un composant (4) qui joue le rôle de bras de levier et qui est connecté à l'élément d'amortissement et le long duquel est monté au moins un palier de fixation réglable (5) sur lequel le matériau absorbeur (1) ou une console (6) logeant ce dernier est fixée,
**caractérisé en ce qu'**il comporte au moins deux desdites constructions d'amortissement (11) où chaque construction d'amortissement (11) est constituée par l'élément d'amortissement (2) et par le composant (4) qui joue le rôle de bras de levier et où les éléments d'amortissement (2) sont des paliers en élastomère et les bras de levier (4) pointent suivant la direction opposée et peuvent exécuter des mouvements en rotation moyennant l'angle de vibration (10) autour des points de rotation des éléments d'amortissement afin de permettre des mouvements oscillatoires correspondants du matériau absorbeur (1).

2. Absorbeur de vibrations selon la revendication 1, **caractérisé en ce que** les éléments d'amortissement (2) présentent des raideurs élastiques différentes.

3. Absorbeur de vibrations selon la revendication 1 ou 2, **caractérisé en ce que** les paliers de fixation (5) comportent un élément d'amortissement supplémentaire (3) pour des mouvements de compensation.

4. Absorbeur de vibrations selon l'une des revendications 1 à 3, **caractérisé en ce qu'**il comporte quatre desdites constructions d'amortissement (11), où, dans chaque cas, deux constructions d'amortissement forment une paire et sont agencées l'une après l'autre de telle sorte que les deux éléments d'amortissement (2) soient localisés le long l'un de l'autre selon une ligne et que les bras de levier (4) qui sont montés dessus en association avec le palier de fixation réglable respectif (5) pointent vers l'extérieur et que les deux paires soient agencées à l'opposé l'une de l'autre de telle sorte que les quatre bras de levier au total forment un plan avec les quatre paliers de fixation (5), et ledit matériau absorbeur ou ladite console est fixée sur les paliers de fixation au moyen d'un moyen de fixation (7).

5. Utilisation d'un absorbeur de vibrations selon l'une des revendications 1 à 4 pour amortir des vibrations de structures, de constructions d'escalier et de machines en faisant se correspondre la fréquence du matériau absorbeur vis-à-vis du système de vibration respectif.

6. Utilisation selon la revendication 5, **caractérisée en ce que** ladite mise en correspondance de fréquence est réalisée en modifiant la position des paliers de fixation réglables (5) de telle sorte que lorsqu'une force opère sur les bras de levier d'une certaine longueur des constructions d'amortissement (11), l'élément d'amortissement (2) contre cette force par un mouvement de compensation du matériau absorbeur.

7. Utilisation selon la revendication 6, **caractérisée en ce que**, pour un réglage fin de l'absorbeur de vibrations par rapport au système de vibration respectif, le matériau et également la position de l'absorbeur ne sont ni l'un ni l'autre modifiés.
